# EUROPÄISCHE PATENTSCHRIFT

(11) **EP 0 587 617 B1**
(45) Veröffentlichungstag und Bekanntmachung des Hinweises auf die Patenterteilung: **17.05.1995**
(21) Anmeldenummer: 92910764.7
(22) Anmeldetag: 01.06.1992
(51) Int. Cl.: H01R 4/02, H01R 43/02, H01F 5/04, H01F 41/10, B23K 9/007

(54) **SCHWEISSVERFAHREN ZUR VERBINDUNG EINES WICKLUNGSDRAHTES EINER SPULE MIT EINEM ANSCHLUSSELEMENT**
WELDING PROCESS FOR CONNECTING A WINDING WIRE OF A COIL TO A TERMINAL
PROCEDE DE SOUDAGE POUR LE RACCORDEMENT D'UN FIL D'ENROULEMENT D'UNE BOBINE AVEC UNE BORNE

(30) Priorität: 03.06.1991 DE 4118166
(43) Veröffentlichungstag der Anmeldung: 23.03.1994
(73) Patentinhaber: SIEMENS AKTIENGESELLSCHAFT, 80333 München (DE)
(72) Erfinder: FIEDLER, Arthur, D-97618 Wollbach (DE); SÖLLNER, Hans-Jürgen, D-12277 Berlin (DE); VOJTA, Erich, D-91334 Hemhofen (DE)
(86) Internationale Anmeldenummer: DE9200443
(87) Internationale Veröffentlichungsnummer: WO9222103

(56) Entgegenhaltungen:
- DE-A- 3 911 027
- DE-C- 915 104
- US-A- 4 530 563

## Beschreibung

Die Erfindung betrifft ein Schweißverfahren zur Verbindung eines vorzugsweise isolierten Wicklungsdrahtes einer Spule mit einem Anschlußelement, wobei eine Metall-Hülse über das Anschlußelement und den daran angelegten Wicklungsdraht gesteckt wird und wobei dann die Metallhülse, das Anschlußelement und der Wicklungsdraht unter Schutzgas miteinander verschweißt werden.

Ein bevorzugtes Anwendungsgebiet für die Erfindung sind Spulen für elektromagnetische Relais oder ähnliche Schaltgeräte. Die Wicklungen dieser Spulen bestehen in der Regel aus lackisolierten Kupferdrähten, wobei für den Einsatz unter höherer Wärmebelastung eine warmfeste Lackisolierung für die Wicklungsdrähte erforderlich ist. Zur Kontaktierung der Wicklungsenden mit entsprechenden Anschlußelementen ist es bisher weitgehend üblich, den abisolierten Wicklungsdraht mit den Anschlußelementen zu verlöten. Diese Verlötung hat neben einer aufwendigen Verfahrenstechnik hinsichtlich der Lötbäder und der Handhabung den Nachteil, daß die dabei verwendeten Flußmittel, soweit sie nicht restlos entfernt werden können, später in dem Schaltgerät kontaktschädliche Dämpfe erzeugen können.

Daneben ist es auch bereits bekannt, Wicklungsdrähte und Anschlußelemente mittels einer Schweißverbindung zu kontaktieren. Bei herkömmlichen Schweißverfahren besteht allerdings die Gefahr, daß die Kupferlegierungen der Wicklungsdrähte bzw. der Anschlußelemente verspröden und damit bruchgefährdet sind. Es ist deshalb in der DE 39 11 027 A1 bereits ein Verfahren der eingangs genannten Art vorgeschlagen worden, bei dem ein Lichtbogen-Schweißverfahren unter Schutzgas durchgeführt wird, wobei eine Metall-Hülse über dem Anschlußelement und dem angewickelten Draht verschweißt wird. Allerdings handelt es sich dort um eine an beiden Enden offene Hülse, die über das Anschlußelement bis zu dessen Verankerung im Grundkörper gesteckt und dann noch an den Grundkörper angedrückt wird. Dabei besteht die Gefahr, daß der angewickelte Wicklungsdraht in unerwünschter Weise gespannt und gegebenenfalls auch zwischen Metall-Hülse und Grundkörper gequetscht wird, was eine spätere Bruchgefahr, beispielsweise bei Temperaturänderungen, zur Folge hat.

Aus der DE-C-0 915 104 ist eine Kontaktkappe zum Aufstecken auf ein stabförmiges elektrisches Schaltelement bekannt, bei dem ein Anschlußdraht mit der Kappe verschweißt wird. Die Kappe besitzt zu diesem Zweck einen zusätzlichen Ansatz, der mit dem Anschlußdraht verschweißt wird. Eine Verschweißung der Kontaktkappe selbst mit dem Schaltelement ist dort jedoch nicht vorgesehen.

Ziel der Erfindung ist es, das eingangs genannte Schutzgasschweißverfahren mit Verwendung einer Metall-Hülse so weiterzubilden, daß die Hülse möglichst einfach zu handhaben und auf dem Anschlußelement zu positionieren ist, ohne daß der Wicklungsdraht im Bereich zwischen Grundkörper und Anschlußelement mechanisch beansprucht wird.

Erfindungsgemäß wird dies dadurch erreicht, daß eine Metall-Hülse in Form eines Hütchens mit einem zumindest teilweise geschlossenen Ende verwendet wird, welche nach dem Aufstecken aufgrund ihrer Abmessungen mit ihrem geschlossenen Ende auf dem freien Ende des Anschlußelementes aufsitzt und mit der Abschlußkante ihres offenen Endes den zwischen einem Spulenkörper und dem darin verankerten Anschlußelement gebildeten Winkelbereich frei läßt, und daß die Metallhülse von ihrem geschlossenen Ende her aufgeschmolzen wird.

Durch die Verwendung einer Metall-Hülse in Form eines Hütchens bleibt diese nach dem Aufsetzen auf das freie Ende des Anschlußelementes ohne zusätzliche Maßnahmen auf dem Endabschnitt dieses Anschlußelementes sitzen, so daß der im Winkelbereich zwischen Grundkörper und Anschlußelement herangeführte Wicklungsdraht durch die Abschlußkante des Hütchens nicht zusätzlich gespannt wird. Da das Hütchen zum leichteren Aufsetzen einen größeren Durchmesser als das Anschlußelement mit dem angewickelten Wicklungsende besitzen muß, kann es von Vorteil sein, dieses Hütchen vor dem Verschweißen in Seitenbereichen mit einer zangenartigen Vorrichtung an das Anschlußelement zu quetschen. Diese zangenartige Vorrichtung kann zugleich eine Elektrode bei Anwendung des WIG- oder Plasma-Lichtbogenschweißverfahrens bilden.

Neben den erwähnten Lichtbogenschweißverfahren können auch andere Schmelzschweißverfahren, wie Laserstrahlschweißen angewendet werden. In jedem Fall wird jedoch, wie anfangs bereits vorausgesetzt, Schutzgas vorzugsweise in Axialrichtung auf das zu verschweißende geschlossene Hütchenende geblasen, um ein Verspröden und Verzundern der Schweißstelle zu vermeiden.

Das zur Anwendung bei dem erfindungsgemäßen Verfahren verwendete Metall-Hütchen kann beispielsweise als Tiefziehteil ausgebildet sein. Besonders einfach wird die Herstellung und Handhabung, wenn das Hütchen aus einem Blechzuschnitt mit einem in der Breite verminderten Mittelteil und zwei länglichen Seitenteilen besteht, wobei der Mittelteil das teilweise geschlossene Ende des Hütchens und die beiden aufgebogenen Seitenteile einen Hülsenmantel bilden. Als Material für das Hütchen kommt beispielsweise Edelstahl oder mit Kupfer plattierter Stahl in Betracht. In einer bevorzugten Ausführungsform besteht das Hütchen aus einer Legierung auf Kupferbasis mit einer sogenannten Silphos-Plattierung. Hierbei handelt es sich um eine übliche Hartlotschicht, welche Kupfer, Silber und Phosphor enthält.

Die Erfindung wird nachfolgend an Ausführungsbeispielen anhand der Zeichnung näher erläutert. Es zeigen
Figur 1 eine Anordnung zum Anschweißen eines Wicklungsdrahtes nach der Erfindung bei Anwendung eines Lichtbogenschweißverfahrens, z. B. WIG-Schweißen,
Figur 2 einen Spulenanschlußstift mit angeschweißtem Wicklungsende nach Durchführung eines erfindungsgemäßen Schweiß-verfahrens,
Figur 3 eine gegenüber Figur 1 abgewandelte Anordnung zur Anwendung eines Laser-Schweißverfahrens,
Figur 4 ein beim erfindungsgemäßen Schweißverfahren verwendbares Metall-Hütchen als Tiefziehteil (im Schnitt),
Figur 5a und 5b einen Blechzuschnitt und ein daraus geformtes Metall-Hütchen,
Figur 6a und 6b einen gegenüber Figur 5 etwas abgewandelten Blechzuschnitt sowie ein daraus geformtes Metall-Hütchen.

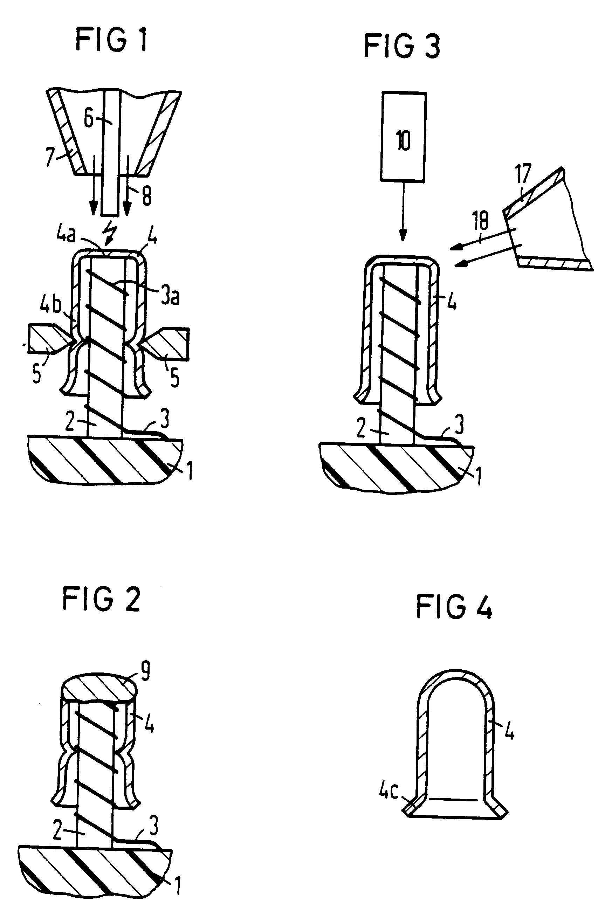

In Figur 1 ist ein Ausschnitt aus einem Spulenkörper 1 mit einem darin verankerten Anschlußstift 2 gezeigt, an welchen das Wicklungsende 3a einer nicht weiter dargestellten, auf dem Spulenkörper 1 befindlichen Wicklung angewickelt ist. Der Wicklungsdraht 3 besteht beispielsweise aus Kupfer oder einer Kupferlegierung und ist mit einer Lackisolierung versehen. Zur elektrischen und mechanischen Verbindung zwischen dem Anschlußstift 2 und dem Wicklungsende 3a ist über das freie Ende des Anschlußstiftes 2 ein Metall-Hütchen 4 gesteckt, welches mit seinem geschlossenen Ende 4a auf dem Anschlußstift 2 aufsitzt, so daß es in Axialrichtung des Stiftes 2 genau plaziert ist. Im vorliegenden Beispiel ist das Hütchen im Bereich seiner Seitenwände 4b mittels schematisch dargestellter Zangenbacken 5 an den Anschlußstift 2 bzw. das angewickelte Wicklungsende 3a angequetscht, so daß es auch in Radialrichtung positioniert ist.

Um nun den Anschlußstift 2 mit dem Wicklungsende 3a und dem Hütchen 4 zu verschweißen, ist eine Lichtbogenschweißanordnung vorgesehen, bei der gegebenenfalls die Zangenbacken 5 als eine erste Elektrode dienen, während eine zweite Elektrode 6 etwa in Axialrichtung zum Anschlußstift 2 oberhalb des letzteren angeordnet ist. Die Elektrode 6 ist Teil eines WIG-Schweißbrenners, versehen mit einer Schutzgasdüse 7, aus der während des Schweißvorgangs ein Schutzgasstrom 8 auf den Schweißbereich geblasen wird.

Bei diesem Schweißvorgang wird das geschlossene Ende 4a des Hütchens 4 zusammen mit dem Ende des Anschlußstiftes 2 und einem Teil des Wicklungsendes 3a zu einer Schweißperle 9 verschmolzen, welche nach dem Erstarren die in Figur 2 schematisch gezeigte Form einnimmt. Das Wicklungsende 3a ist dann mit dem Anschlußstift 2 elektrisch und mechanisch verbunden, ohne daß eine Versprödung des Materials eintritt.

Eine Figur 1 entsprechende Anordnung bei Anwendung eines Laser-Schweißverfahrens zeigt Figur 3. In diesem Fall dient eine seitliche Düse 17 lediglich zur Zufuhr des Schutzgasstromes 8, während die Wärmezufuhr mittels eines Lasers 10 von oben her erfolgt. Im übrigen ist die Anordnung gleich oder ähnlich wie in Figur 3. Grundsätzlich könnten die Positionen des Lasers 10 und der Düse 17 auch vertauscht sein; durch die axiale Wärmezufuhr erhält man jedoch eine gleichmäßigere Verschweißung des Hütchens und des Wicklungsendes. Auch in diesem Fall könnte das Hütchen 4 vor dem Schweißen mittels Zangenbacken 5 angequetscht werden.

In Figur 4 ist schematisch ein einzelnes Hütchen 4 im Schnitt gezeigt, welches aus Blechmaterial tiefgezogen ist. Der offene Rand 4c wird zweckmäßigerweise konisch nach außen gezogen, um das Aufstecken des Hütchens auf den Anschlußstift 2 zu erleichtern.

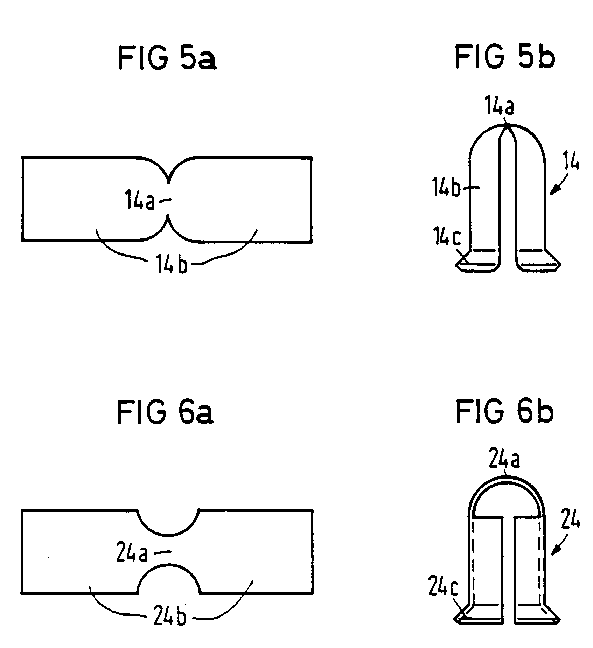

Figur 5 zeigt in zwei Darstellungen a und b die Herstellung eines Hütchens 14 aus einem Blechzuschnitt, der einen von beiden Seiten her eingeschnittenen Mittelteil 14a und zwei Seitenteile 14b aufweist. Durch Biegen in einer Form wird der Mittelteil 14a zum teilweise geschlossenen Ende des Hütchens 14, während die Seitenteile 14b zu einem mehr oder weniger geschlossenen Mantel verformt werden. Auch in diesem Fall wird der Rand 14c konisch nach außen gebogen.

Figur 6 zeigt ebenfalls in zwei Ansichten eine etwas abgewandelte Form eines Hütchens 24, das aus einem Blechzuschnitt (Figur 6a) gebogen wird. In diesem Fall ist der Mittelteil 24a durch halbkreisförmige Ausnehmungen zwischen den beiden Seitenteilen 24b eingeschnürt. Nach der Verformung in einem Werkzeug entsteht das Hütchen gemäß Figur 6b mit einem teilweise geschlossenen Ende und dem aus den Seitenteilen 24b gebildeten Mantel. Der Rand 24c ist wieder konisch nach außen verformt.

## Patentansprüche

1. Schweißverfahren zur Verbindung eines Wicklungsdrahtes (3) einer Spule mit einem Anschlußelement (2), wobei eine Metallhülse (4, 14, 24) über das Anschlußelement und den daran angelegten Wicklungsdraht (3) gesteckt wird und wobei dann die Metallhülse, das Anschlußelement und der Wicklungsdraht unter Schutzgas miteinander verschweißt werden, **dadurch gekenn****zeichnet,** daß eine Metallhülse (4, 14, 24) in Form eines Hütchens mit einem zumindest teilweise geschlossenen Ende (4a, 14a, 24a) verwendet wird, welche nach dem Aufstecken aufgrund ihrer Abmessungen mit ihrem geschlossenen Ende auf dem freien Ende des Anschlußelementes (2) aufsitzt und mit der Abschlußkante ihres offenen Endes den zwischen einem Spulenkörper (1) und dem darin verankerten Anschlußelement (2) gebildeten Winkelbereich frei läßt, und daß die Metallhülse (4, 14, 24) von ihrem geschlossenen Ende her aufgeschmolzen wird.

2. Verfahren nach Anspruch 1, **dadurch gekennzeichnet,** daß die Metallhülse (4, 14, 24) vor dem Verschweißen mit einer zangenartigen Vorrichtung (5) in Seitenbereichen (4b) an das Anschlußelement gequetscht wird.

3. Verfahren nach Anspruch 1 oder 2, **dadurch gekennzeichnet**, daß ein Lichtbogen-Schweißverfahren angewendet wird, wobei die auf das Anschlußelement gesetzte Metallhülse (4) mit einer radial angelegten Kontaktschiene (5) kontaktiert wird und daß das Schutzgas über eine als Gegenelektrode (6) dienende Düse (7) etwa in Axialrichtung auf die Metallhülse geblasen wird.

4. Verfahren nach Anspruch 1 oder 2, **dadurch gekennzeichnet,** daß ein Laser-Schweißverfahren angewendet wird, wobei ein Laserstrahl (10) auf den geschlossenen Endbereich (4a) der Metallhülse (4) gerichtet wird und wobei gleichzeitig über eine Düse (17) Schutzgas (18) auf deren Endabschnitt geblasen wird.

5. Verfahren nach Anspruch 1 oder 2, **dadurch gekennzeichnet,** daß ein Plasma-Schweißverfahren angewendet wird.

6. Verfahren nach einem der Ansprüche 1 bis 5, **dadurch ge****kennzeichnet,** daß als Metallhülse ein Tiefziehteil in Form eines einseitig geschlossenen Hütchens (4) verwendet wird.

7. Verfahren nach einem der Ansprüche 1 bis 5, **dadurch ge****kennzeichnet,** daß die Metallhülse aus einem Blechzuschnitt (14, 24) mit einem in der Breite verminderten Mittelteil (14a, 24a) und zwei länglichen Seitenteilen (14b, 24b) geformt wird, wobei der Mittelteil das teilweise geschlossene Ende und die aufgebogenen Seitenteile den Mantel der Metallhülse bilden.

8. Verfahren nach Anspruch 6 oder 7, **dadurch gekennzeichnet,** daß der Mantel der Metallhülse (4, 14, 24) an seinem offenen Ende (4c, 14c, 24c) konisch nach außen verformt wird.

9. Verfahren nach einem der Ansprüche 6 bis 8, **dadurch ge****kennzeichnet,** daß die Metallhülse aus Edelstahl besteht.

10. Verfahren nach einem der Ansprüche 6 bis 8, **dadurch ge****kennzeichnet**, daß die Metallhülse aus einem mit Kupfer plattierten Stahlband besteht.

11. Verfahren nach einem der Ansprüche 6 bis 8, **dadurch ge****kennzeichnet,** daß die Metallhülse aus einer Legierung auf Kupferbasis mit einer Silphos-Plattierung besteht.

## Claims

1. Welding process for connecting a winding wire (3) of a coil to a terminal (2), a metal sleeve (4, 14, 24) being slipped over the terminal and the winding wire (3) attached to the latter, and the metal sleeve, the terminal and the winding wire then being welded to one another under inert gas, characterized in that use is made of a metal sleeve (4, 14, 24) in the form of a cap having an at least partially closed end (4a, 14a, 24a), which metal sleeve (4, 14, 24), after being slipped on, is seated, as a result of its dimensions, with its closed end on the free end of the terminal (2) and, with the end edge of its open end, leaves free the angular region formed between a coil form (1) and the terminal (2) anchored therein, and in that the metal sleeve (4, 14, 24) is melted on from its closed end.

2. Process according to Claim 1, characterized in that, before the welding, the metal sleeve (4, 14, 24) is pinched in side regions (4b) against the terminal by means of a pincer-like device (5).

3. Process according to Claim 1 or 2, characterized in that an arc-welding process is used, the metal sleeve (4) placed onto the terminal being contacted with a radially applied contact bar (5), and in that the inert gas is blown onto the metal sleeve approximately in the axial direction via a nozzle (7) serving as a counter-electrode (6).

4. Process according to Claim 1 or 2, characterized in that a laser-welding process is used, a laser beam (10) being directed onto the closed end region (4a) of the metal sleeve (4), and inert gas (18) simultaneously being blown onto the end portion of the latter via a nozzle (17).

5. Process according to Claim 1 or 2, characterized in that a plasma-welding process is used.

6. Process according to one of Claims 1 to 5, characterized in that a deep-drawn part in the form of a cap (4) closed on one side is used as the metal sleeve.

7. Process according to one of Claims 1 to 5, characterized in that the metal sleeve is formed from a sheet-metal blank (14, 24) having a middle part (14a, 24a) of reduced width and two elongated side parts (14b, 24b), the middle part forming the partially closed end and the bent-up side parts forming the casing of the metal sleeve.

8. Process according to Claim 6 or 7, characterized in that the casing of the metal sleeve (4, 14, 24) is shaped conically outwards at its open end (4c, 14c, 24c).

9. Process according to one of Claims 6 to 8, characterized in that the metal sleeve consists of special steel.

10. Process according to one of Claims 6 to 8, characterized in that the metal sleeve consists of a copper-plated steel strip.

11. Process according to one of Claims 6 to 8, characterized in that the metal sleeve consists of an alloy based on copper with a silphos plating.

## Revendications

1. Procédé de soudage pour le raccordement d'un fil d'enroulement (3) d'une bobine à un élément de raccordement (2), selon lequel on enfiche une douille métallique (4,14,24) sur l'élément de raccordement et sur le fil d'enroulement (3) appliqué contre cet élément, et on soude ensuite entre eux la douille métallique, l'élément de raccordement et le fil d'enroulement, sous gaz protecteur, caractérisé par le fait qu'on utilise une douille métallique (4,14,24) se présentant sous la forme d'un petit chapeau possédant une extrémité au moins partiellement fermée (4a,14a,24a), qui, après l'enfichage, prend appui, en raison de ses dimensions, par son extrémité fermée sur l'extrémité libre de l'élément de raccordement (2) et libère, par le bord de fermeture de son extrémité ouverte, la zone angulaire formée entre le corps de bobine (1) et l'élément de raccordement (2) ancré dans ce corps, et qu'on fait fondre la douille métallique (4, 14,24) à partir de son extrémité fermée.

2. Procédé suivant la revendication 1, caractérisé par le fait qu'avant le soudage, la douille métallique (4,14,24) est pincée, au moyen d'un dispositif en forme de pince (5), au niveau de parties latérales (4b), sur l'élément de raccordement.

3. Procédé suivant la revendication 1 ou 2, caractérisé par le fait qu'on utilise un procédé de soudage à arc, selon lequel on amène la douille métallique (4) montée sur l'élément de raccordement, en contact avec un rail de contact appliqué radialement (5) et qu'on projette par soufflage le gaz protecteur approximativement dans la direction axiale sur la douille métallique, par l'intermédiaire d'une buse (7), utilisée comme contre-électrode (6).

4. Procédé suivant la revendication 1 ou 2, caractérisé par le fait qu'on utilise un procédé de soudage laser, selon lequel on dirige le faisceau laser (10) sur la zone d'extrémité fermée (4a) de la douille métallique (4) et on projette simultanément, par soufflage, le gaz protecteur (18), au moyen d'une buse (17), sur la partie d'extrémité de la douille.

5. Procédé suivant la revendication 1 ou 2, caractérisé par le fait qu'on utilise un procédé de soudage plasmatique.

6. Procédé suivant l'une des revendications 1 à 5, caractérisé par le fait qu'on utilise comme douille métallique, une pièce emboutie ayant la forme d'un petit chapeau (4) fermé d'un côté.

7. Procédé suivant l'une des revendications 1 à 5, caractérisé par le fait qu'on forme la douille métallique à partir d'un flan en tôle (14,24) avec une partie centrale (14a,24a) de largeur réduite et deux parties latérales allongées (14b,24b), la partie centrale formant l'extrémité partiellement fermée, tandis que les parties latérales repliées forment l'enveloppe de la douille métallique.

8. Procédé suivant la revendication 6 ou 7, caractérisé par le fait qu'on donne une forme conique dirigée vers l'extérieur à l'enveloppe de la douille métallique (4, 14,24), au niveau de son extrémité ouverte (4c,14c,24c).

9. Procédé suivant l'une des revendications 6 à 8, caractérisé par le fait que la douille métallique est réalisée en un acier spécial.

10. Procédé suivant l'une des revendications 6 à 8, caractérisé par le fait que la douille métallique est formée à partir d'une bande d'acier plaquée de cuivre.

11. Procédé suivant l'une des revendications 6 à 8, caractérisé parle fait que la douille métallique est formée par un alliage à base de cuivre comportant un placage Silphos.
